# FASCICULE DE BREVET EUROPEEN

(11) **EP 2 027 016 B1**
(45) Date de publication et mention de la délivrance du brevet: **09.12.2009**
(21) Numéro de dépôt: 07730061.4
(22) Date de dépôt: 11.06.2007
(51) Int. Cl.: B64G 1/22, B64G 1/44, H01L 31/045, H01Q 1/28, B64G 1/66

(54) **SYSTEME DE DEPLOIEMENT D'APPENDICES SPATIAUX ET APPENDICE SPATIAL COMPORTANT UN TEL SYSTEME**
SYSTEM ZUM ENTFALTEN VON RAUMANSATZTEILEN UND SOLCH EIN SYSTEM UMFASSENDE RAUMANSATZTEILE
SYSTEM FOR DEPLOYING SPATIAL APPENDICES AND SPATIAL APPENDIX COMPRISING SUCH A SYSTEM

(30) Priorité: 12.06.2006 FR 0652090
(43) Date de publication de la demande: 25.02.2009
(73) Titulaire: THALES, 92200 Neuilly sur Seine (FR)
(72) Inventeur: D'ABRIGEON, Laurent, 06590 Theoule (FR); BAUDASSE, Yannick, 06130 Grasse (FR)
(74) Mandataire: Esselin, Sophie
(86) Numéro de dépôt international: PCT/EP2007/055727
(87) Numéro de publication internationale: WO 2007/144329

(56) Documents cités:
- EP-A- 0 889 534
- EP-A- 1 547 923
- US-A- 4 703 907
- US-A- 6 124 835

## Description

L'invention concerne un système de déploiement d'appendices spatiaux tels que par exemple un mât, un bras d'antenne, un générateur solaire cf. US 6 124 835. Elle concerne également un appendice spatial comprenant un tel système.

L'invention s'applique particulièrement aux générateurs solaires pour engins spatiaux notamment les satellites. Elle s'applique en particulier aux systèmes de déploiement d'emplanture spécifique ou d'articulation de transfert. De tels systèmes sont utilisés pour le déploiement des panneaux solaires des satellites.

Les générateurs solaires comportent plusieurs panneaux solaires repliés sur le mur du satellite pendant le lancement.

Ces systèmes de déploiement comportent une ou plusieurs lignes d'articulations de déploiement munie(s) de deux axes de rotation.

Le problème posé consiste à mettre en oeuvre une cinématique de déploiement selon laquelle l'axe mené ne doit jamais être débrayé de l'axe menant, la rotation d'ensemble ne doit être menée que par l'axe menant.

En outre le système doit pouvoir être utilisé pour n'importe qu'elle ligne d'articulation lors de déploiements complexes en particulier, pour des emplantures spécifiques, ou à articulations de transfert.

Il existe à ce jour des solutions qui ne répondent pas à cette problématique.

En effet, les solutions à base d'engrenages à secteur denté ne conviennent pas car elles laissent l'axe mené débrayé sur la première phase de déploiement et les solutions à base de cliquets ou de verrous ne conviennent pas car elles ne sont pas réversibles.

La présente invention permet de résoudre ce problème.

L'invention a plus particulièrement pour objet un système de déploiement d'appendices spatiaux comprenant au moins une ligne d'articulation de déploiement en deux phases, munie de deux axes de rotation, principalement caractérisé en ce qu'il comporte un mécanisme de synchronisation des deux axes de rotation de sorte que, lorsque l'axe menant tourne pendant une première phase de déploiement, l'axe mené ne tourne pas, puis, lorsque l'axe menant tourne pendant la deuxième phase de déploiement, l'axe mené tourne de façon synchronisée avec l'axe menant.

Ainsi, le mécanisme de synchronisation des deux axes de rotation est agencé de sorte que lorsque l'axe menant tourne pendant la première phase, de la position repliée à une position intermédiaire, l'axe mené ne tourne pas, puis pendant la deuxième phase, lorsque l'axe menant tourne de la position intermédiaire à une position finale, l'axe mené tourne en synchronisme jusqu'à cette position finale.

Pour que l'axe mené soit retenu et que le mécanisme soit réversible, le mécanisme de synchronisation comporte des moyens de retenue de l'axe mené permettant, lorsque l'axe menant tourne de la position repliée à la position intermédiaire, de maintenir l'axe mené et, des moyens de libération qui pendant une deuxième phase, lorsque l'axe menant tourne de la position intermédiaire à la position finale, permet la rotation de l'axe mené en synchronisme avec l'axe menant pour atteindre la position finale.

Les moyens de retenue comportent un système à poulie sur l'axe mené, d'où partent deux brins de câble attachés indépendamment l'un de l'autre aux moyens de libération ; les moyens de libération comportent un premier dispositif enrouleur-dérouleur, un deuxième dispositif enrouleur-dérouleur, ces dispositifs étant excentriques, l'un des brins de câble comportant un point d'attache sur le premier dispositif enrouleur-dérouleur tandis que l'autre brin comporte un point d'attache sur le deuxième dispositif enrouleur-dérouleur, le système à poulie et les dispositifs enrouleur-dérouleur étant liés par les deux brins de câble de sorte que l'un des dispositifs permet d'enrouler un brin à partir de la position intermédiaire de l'axe menant à la position finale tandis que l'autre dispositif permet de dérouler l'autre brin jusqu'à ce que l'axe mené atteigne la position finale.

Selon un exemple de réalisation, les dispositifs enrouleurs-dérouleurs comportent chacun un secteur de poulie.

L'invention concerne également un générateur solaire comportant un système de déploiement selon l'une quelconque des caractéristiques précédentes.

D'autres particularités et avantages de l'invention apparaîtront clairement à la lecture de la description qui est faite ci-après et qui est donnée à titre d'exemple illustratif et non limitatif et en regard des figures sur lesquelles :
- les figures la, 1b 1c et 1d illustrent schématiquement la cinématique de déploiement mise en oeuvre par le mécanisme selon l'invention ;
- la figure 2 illustre le diagramme de la cinématique,
- La figure 3 illustre plus en détail le mécanisme de synchronisation selon l'invention,
- Les figures 4a, 4b, 4c et 4d illustrent schématiquement le fonctionnement du mécanisme de synchronisation de la figure 3 à chaque séquence de déploiement.

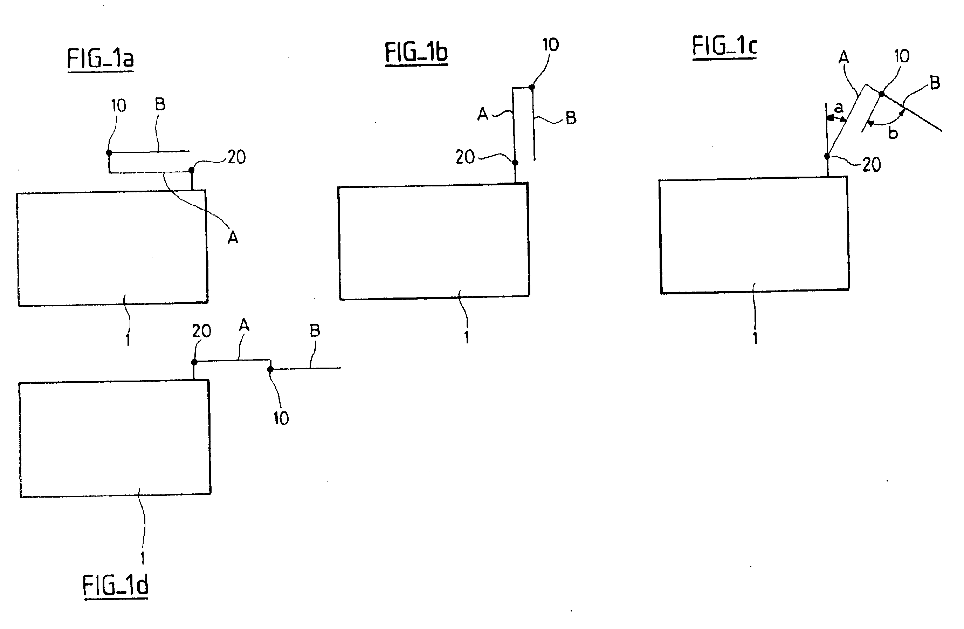

L'engin spatial 1 schématisé sur les figures 1 est équipé de deux lignes d'articulation de déploiement munie chacune de deux axes de rotation dont l'un est l'axe mené 10 et l'autre l'axe menant 20. Les parties A et B couplées aux axes d'articulation comprennent des panneaux solaires permettant d'apporter de l'énergie à l'engin spatial.

Le déploiement s'opère suivant la séquence illustrée par les étapes numérotées la à 1d sur cette figure.

Dans la suite les valeurs des angles de rotation sont données à titre d'exemple pour mieux comprendre le fonctionnement.

De façon pratique, la rotation de l'axe menant jusqu'à la position intermédiaire est de 90°, et la rotation jusqu'à la position finale est de 180°.

En phase de position repliée (dite également stockée), les parties couplées aux articulations de déploiement sur l'axe menant et sur l'axe mené, se trouvent dans la position illustrée par l'étape 1a. En phase de déploiement, les parties A s'ouvrent, passant d'une position 0 à 90°, et les parties B sont toujours repliées sur les parties A comme illustré à l'étape 1b A l'étape 1c, les parties A continuent à se déployer et les partie B commencent le déploiement. Les parties A et B continuent à se déployer pour se trouver dans la position finale de l'étape 1d, après une ouverture, de 90° à 180°, pour les parties A et 0° à 180° pour les parties B.

La cinématique de déploiement exige que lors de la phase la de déploiement correspondant aux étapes 1a et 1b du schéma, on passe de la position dite « stockée » à la position 90°, les deux parties n'ont pas de mouvement l'une par rapport à l'autre et l'axe mené 11, est retenu pour éviter tout mouvement relatif perturbateur.

Lors de la phase 1b de déploiement correspondant aux étapes 1c et 1d du schéma, on passe de la position 90° à la position déployée, l'angle d'ouverture relatif entre les deux parties mobiles est synchronisé avec l'angle d'ouverture de la première partie mobile.

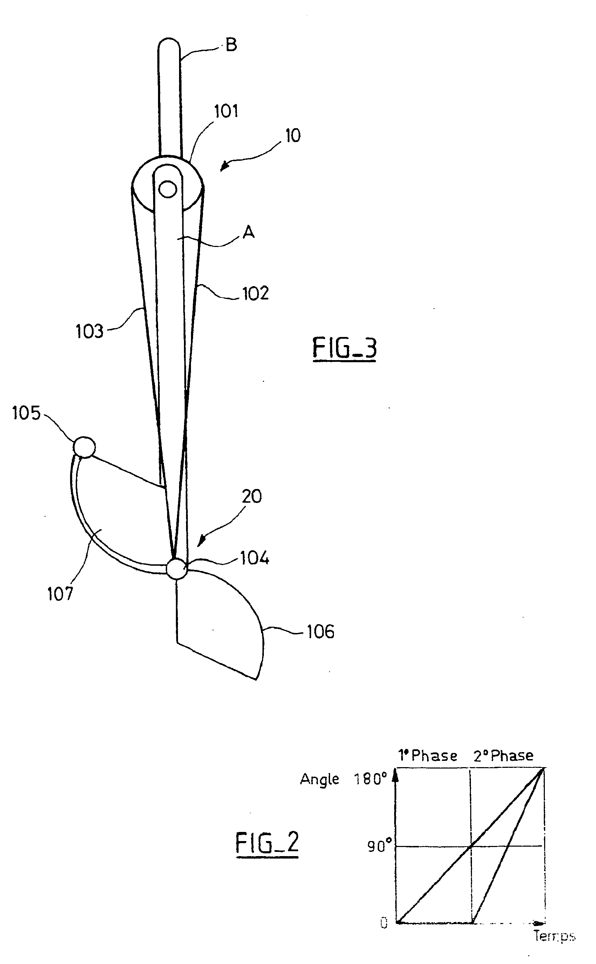

La figure 2 illustre le diagramme de la cinématique de déploiement. L'angle b est en général égal à 2a.

Lors du déploiement et conformément à la cinématique de déploiement demandée, l'axe mené 10 n'est jamais débrayé de l'axe menant 20. La rotation d'ensemble n'est menée que par l'axe menant.

La figure 3 illustre le mécanisme de synchronisation mettant selon l'invention permettant de mettre en oeuvre cette cinématique.

Ce mécanisme comprend un système de poulie 101 sur l'axe mené 10 d'où partent deux brins de câble 102, 103 arrivant sur des secteurs de poulies excentriques 104, 105. Les deux brins 102, 103 permettent de retenir l'axe mené 10 dans les deux sens de rotation. Le profil des secteurs de poulie n'est pas strictement circulaire mais présente une courbure plus plate que celle d'un cercle de manière à obtenir une translation des câbles, linéaire.

Le brin de câble 102 est fixé au secteur de poulie 106 par un point d'attache 104. Le brin de câble 103 est fixé au secteur de poulie 107 par un point d'attache.105.

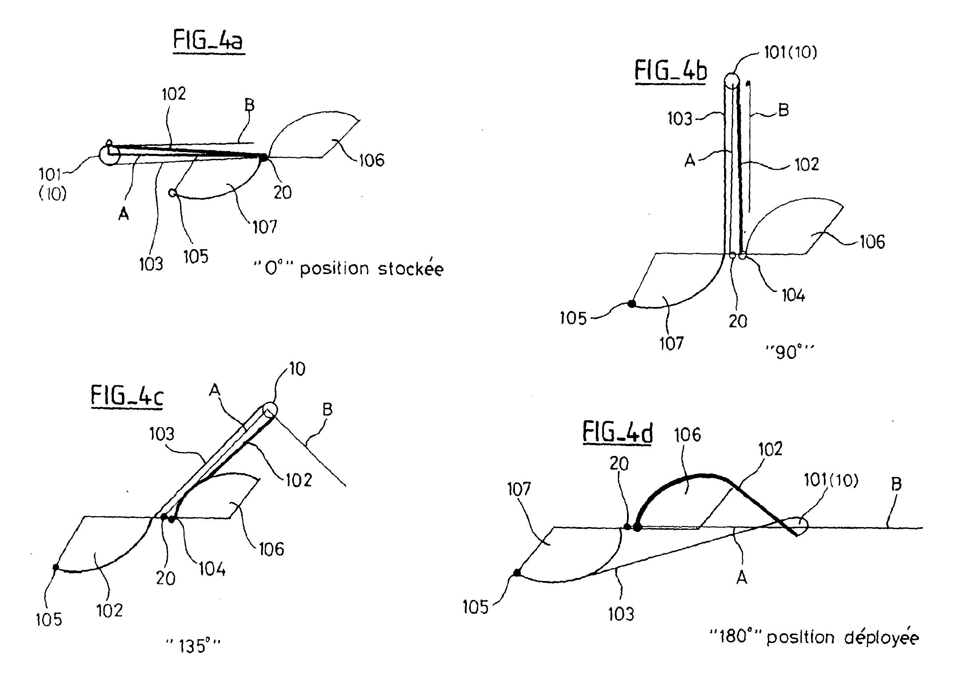

La séquence illustrée aux étapes 4a à 4d de la figure 4 correspond à la cinématique illustrée à la figure 1.

Le secteur de poulie 106 permet d'enrouler le brin de câble 102 à partir de la rotation de l'axe menant de 90° à 180° : étapes 4c et 4d.

Le secteur de poulie 107 permet de dérouler l'autre brin de câble c'est-à-dire le brin 103 à partir de la rotation de l'axe menant de 90° à 180° : étapes 4c et 4d.

L'axe mené est retenu dans les deux sens de rotation quelque soit la configuration pendant la première phase de déploiement. La solution est réversible et permet une transition à 90° sans choc même si la rotation de l'axe menant n'est pas strictement croissante (cas d'oscillations autour d'un angle de rotation moyen).

Les brins de câbles peuvent bien sûr être remplacés de manière équivalente par des bandes flexibles ou des courroies.

Dans une variante de réalisation, le secteur de poulie dérouleur c'est à dire le secteur 107 peut être remplacé par une biellette dont l'axe de rotation est excentré et qui commence à pivoter dès que l'axe menant a tourné de 90°, étape 4b. Cette variante d'exécution permet d'éviter le coude que présente le brin de câble 103 sur le secteur de poulie enrouleur 107 à l'étape 4a (position 0°).

## Revendications

1. Système de déploiement d'appendices spatiaux comprenant au moins une ligne d'articulation de déploiement en deux phases, munie de deux axes de rotation (10, 20), comportant un mécanisme de synchronisation (101, 102, 103, 106, 107), des deux axes de rotation de sorte que lorsque l'axe menant (20) tourne pendant une première phase de déploiement, l'axe mené (10) ne tourne pas, puis, lorsque l'axe menant tourne pendant la deuxième phase de déploiement, l'axe mené tourne de façon synchronisée avec l'axe menant;
- le mécanisme de synchronisation comportant des moyens de retenue (101, 102, 103) permettant pendant la première phase, lorsque l'axe menant tourne d'une position repliée à une position intermédiaire, de maintenir l'axe mené et, des moyens de libération (106, 107) qui pendant la deuxième phase, lorsque l'axe menant tourne de la position intermédiaire à une position finale, de permettre la rotation de l'axe mené en synchronisme avec l'axe menant pour atteindre la position finale; **caractérisé en ce que** :
- lesdits moyens de retenue comportent un système à poulie (101) sur l'axe mené (10), d'où partent deux brins de câble (102, 103) attachés indépendamment l'un de l'autre aux moyens de libération ; les moyens de libération comportant un premier dispositif enrouleur-dérouleur (106), un deuxième dispositif enrouleur-dérouleur (107), ces dispositifs étant excentriques, l'un des brins de câble comportant un point d'attache (104) sur le premier dispositif enrouleur-dérouleur tandis que l'autre brin comporte un point d'attache (105) sur le deuxième dispositif enrouleur-dérouleur, le système à poulie et les dispositifs enrouleur-dérouleur étant liés par les deux brins de câble de sorte que l'un des dispositifs permet d'enrouler un brin de câble à partir de la position intermédiaire de l'axe menant à la position finale tandis que l'autre dispositif permet de dérouler l'autre brin de câble jusqu'à ce que l'axe mené atteigne la position finale.

2. Système de déploiement selon la revendication 1, **caractérisé en ce que**, les dispositifs enrouleurs-dérouleurs comportent chacun un secteur de poulie (106, 107).

3. Système de déploiement selon l'une quelconque des revendications 1 ou 2, **caractérisé en ce que**, la rotation de l'axe menant jusqu'à la position intermédiaire est de 90°, et la rotation jusqu'à la position finale est de 180°.

4. Générateur solaire comportant un système de déploiement selon l'une quelconque des revendications précédentes.

## Claims

1. Deployment system for spatial appendages comprising at least one two-phase deployment articulation line, furnished with two rotation spindles (10, 20), comprising a synchronization mechanism (101, 102, 103, 106, 107), for the two rotation spindles so that when the driving spindle (20) rotates during a first deployment phase, the driven spindle (10) does not rotate, and then, when the driving spindle rotates during the second deployment phase, the driven spindle rotates in a manner synchronized with the driving spindle, the synchronization mechanism comprising retaining means (101, 102, 103) making it possible during the first phase, when the driving spindle rotates from a folded-back position to an intermediate position, to hold the driven spindle and, releasing means (106, 107) which during the second phase, when the driving spindle rotates from the intermediate position to a final position, to allow the rotation of the driven spindle in synchronism with the driving spindle so as to reach the final position; **characterized in that**:
- said retaining means comprise a pulley system (101) on the driven spindle (10), from which there depart two cable strands (102, 103) attached independently of one another to the releasing means; the releasing means comprising a first winder-unwinder device (106), a second winder-unwinder device (107), these devices being eccentric, one of the cable strands comprising a point of attachment (104) onto the first winder-unwinder device while the other strand comprises a point of attachment (105) onto the second winder-unwinder device, the pulley system and the winder-unwinder devices being tied by the two cable strands so that one of the devices makes it possible to wind a cable strand from the intermediate position of the driving spindle to the final position while the other device makes it possible to unwind the other cable strand until the driven spindle reaches the final position.

2. Deployment system according to Claim 1, **characterized in that**, the winder-unwinder devices each comprise a pulley sector (106, 107).

3. Deployment system according to either of Claims 1 and 2, **characterized in that**, the rotation of the driving spindle up to the intermediate position is 90°, and the rotation up to the final position is 180°.

4. Solar generator comprising a deployment system according to any one of the preceding claims

## Patentansprüche

1. System zum Ausbreiten von Raumfahrt-Ansatzteilen, mit wenigstens einer Schwenklinie für die Ausbreitung in zwei Phasen, die mit zwei Drehachsen (10, 20) versehen ist und einen Synchronisationsmechanismus (101, 102, 103, 106, 107) für die zwei Drehachsen enthält, derart, dass dann, wenn die antreibende Achse (20) sich während einer ersten Ausbreitungsphase dreht, die angetriebene Achse (10) sich nicht dreht und dann, wenn sich die antreibende Achse während der zweiten Ausbreitungsphase dreht, die angetriebene Achse sich synchron mit der antreibenden Achse dreht;
- wobei der Synchronisationsmechanismus Haltemittel (101, 102, 103) enthält, die während der ersten Phase dann, wenn sich die antreibende Achse aus einer zusammengeklappten Position in eine Zwischenposition bewegt, ermöglichen, die angetriebene Achse zu halten, und Freigabemittel (106, 107) enthält, die während der zweiten Phase dann, wenn sich die antreibende Achse aus der Zwischenposition in eine Endposition bewegt, die Drehung der angetriebenen Achse synchron mit der antreibenden Achse ermöglichen, um die Endposition zu erreichen;
**dadurch gekennzeichnet, dass**:
- die Haltemittel ein Riemenscheibensystem (101) an der angetriebenen Achse (10) enthalten, wovon zwei Seilteilstücke (102, 103) ausgehen, die unabhängig voneinander an den Freigabemitteln befestigt sind; wobei die Freigabemittel eine erste Aufwickel/Abwickel-Vorrichtung (106) und eine zweite Aufwickel/Abwickel-Vorrichtung (107) enthalten, wobei diese Vorrichtungen exzentrisch sind, wobei eines der Seilteilstücke einen Befestigungspunkt (104) an der ersten Aufwickel/Abwickel-Vorrichtung aufweist, während das andere Teilstück einen Befestigungspunkt (105) an der zweiten Aufwickel/Abwickel-Vorrichtung aufweist, wobei das Riemenscheibensystem und die Aufwickel/Abwickel-Vorrichtungen durch die zwei Seilteilstücke in der Weise verbunden sind, dass eine der Vorrichtungen das Aufwickeln eines Seilteilstücks ausgehend von der Zwischenposition der antreibenden Achse in die Endposition ermöglicht, während die andere Vorrichtung das Abwickeln des anderen Seilteilstücks ermöglicht, bis die angetriebene Achse die Endposition erreicht.

2. Ausbreitungssystem nach Anspruch 1, **dadurch gekennzeichnet, dass** die Aufwickel/Abwickel-Vorrichtungen jeweils einen Riemenscheibensektor (106, 107) enthalten.

3. Ausbreitungssystem nach einem der Ansprüche 1 oder 2, **dadurch gekennzeichnet, dass** die Drehung der antreibenden Achse bis in die Zwischenposition 90° beträgt und die Drehung bis in die Endposition 180° beträgt.

4. Solargenerator, der ein Ausbreitungssystem nach einem der vorhergehenden Ansprüche enthält.
